# EUROPEAN PATENT APPLICATION

(11) **EP 4 169 980 A1**
(43) Date of publication of application: **26.04.2023**
(21) Application number: 21204228.7
(22) Date of filing: 22.10.2021
(51) Int. Cl.: C08L 7/00, C08L 9/06, C08L 21/00

(54) **RUBBER COMPOSITIONS**

(71) Applicant: Bridgestone Europe NV/SA, 1930 Zaventem (BE)
(72) Inventor: Fresch, Enrico, 00128 Roma (IT)
(74) Representative: Marchetti, Alessio

(57) **Abstract**

The invention provides rubber compositions comprising:
(a) a first elastomer comprising one or more styrene butadiene copolymers having a glass transition temperature, Tg, ranging from -40 to -15°C;
(b) a second elastomer comprising natural rubber; and
(c) a hydrocarbon polymer additive component comprising:
(i) a first hydrocarbon polymer additive which is a partially hydrogenated C₅ resin; and
(ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

The rubber compositions are particularly suitable for use in the production of tire components, in particular tire treads.

## Description

### Field of the Invention

The present invention relates to rubber compositions, to methods for their preparation and to their use in the manufacture of vehicle tires and vehicle tire components. It further relates to vehicle tire components made from such rubber compositions, in particular tire treads.

More specifically, the invention relates to compositions having a rubber component comprising a mixture of one or more styrene butadiene rubbers having a high glass transition temperature (Tg) and natural rubber. This rubber component is compounded with a hydrocarbon polymer additive that comprises a blend of partially hydrogenated and fully hydrogenated hydrocarbon resins. The particular blend of hydrocarbon resins advantageously enhances the balance of wet performance, rolling resistance, and wear resistance properties of the rubber composition.

### Background of the Invention

There is a demand for vehicles with lower fuel consumption in order to reduce CO₂ emissions. A lower rolling resistance in vehicle tires can reduce fuel consumption and is therefore desirable. It is also important for tires to have a good grip performance on both dry and wet surfaces, especially on wet road surfaces (i.e. wet performance). A high wear resistance is also an important factor for a long service life of the tire. Together, the wet performance ("WET"), rolling resistance ("RR"), and wear resistance ("WEAR") are known as the 'magic triangle' of viscoelastic properties. There is an ongoing need to produce tires having an improved balance between these properties.

The components of rubber compositions used in the production of tires may be modified to adjust their dynamic / mechanical properties. In an attempt to achieve a better WET/RR/WEAR balance, the use of modified rubbers, mixtures of rubbers and various reinforcing fillers has been proposed. However, improving any one of these properties of the rubber composition often has an adverse impact on at least one of the other properties. For example, it is difficult to improve the wet performance of a tire without adversely affecting its rolling resistance and wear resistance. Whilst an increase in the amount of reinforcing filler results in improved wear performance, this reduces the rolling resistance.

Hydrocarbon resins are widely used as processing aids to enhance dispersion of the different rubber components during rubber compounding. They can also be used to modify the viscoelastic properties of rubber compositions and thus to enhance tire tread performance properties, for example wet grip and rolling resistance. A wide range of hydrocarbon resins are known for use in the production of rubber compositions for tire treads, including aliphatic resins, aromatic resins, partially and fully hydrogenated resins, etc. Examples include C₅ aliphatic resins, C₉ aromatic resins, mixed C₅/C₉ resins, aromatic pure monomer resins, dicyclopentadiene (DCPD) resins, aromatic modified cycloaliphatic resins, coumarone indene resins, rosin resins, terpene resins, modified terpene resins, terpene phenolic resins and hydrogenated versions thereof. Combinations of different hydrocarbon resins have been proposed to control the blend morphology and filler distribution in rubber compositions. Different resins and combinations of resins may differ in their chemical composition and/or molecular weight and this can impact their properties, for example their compatibility with any given rubber or blend of rubbers. In US 2019/0092937, for example, blends of a C₅ aliphatic resin with a DCPD resin or aromatic pure monomer resin are proposed for tuning the material properties of an immiscible blend of natural rubber and a high-cis polybutadiene rubber.

Styrene butadiene rubber (SBR) is well known for use in the manufacture of tires and is often used as a blend with natural rubber. SBR having a high glass transition temperature (Tg) can be used to increase the overall Tg of rubber compositions. The high Tg of the composition leads to improved wet performance, but is accompanied by a reduction in rolling resistance and wear. Various attempts have been made to improve RR and WEAR whilst retaining the WET performance, such as increasing the vinyl content of the SBR and the introduction of functional groups onto the polymer chains. To date, the impact of the hydrocarbon resin on the dynamic properties of rubber compositions containing a blend of a high Tg SBR and natural rubber has not been investigated.

There remains a need to provide tires having an improved WET/RR/WEAR balance. In particular, there is a need to provide a good balance in these properties in a rubber composition containing a blend of a high Tg styrene butadiene copolymer and natural rubber.

### Summary of the invention

The inventors have now surprisingly found that a specific blend of partially hydrogenated and fully hydrogenated hydrocarbon resins is capable of improving the WET/RR/WEAR balance of a rubber composition containing at least one high Tg styrene butadiene copolymer and natural rubber. The extent of improvement compared to the use of each hydrocarbon resin alone is unexpected and is sufficient to counteract the reduction in wet performance and rolling resistance observed when incorporating a reinforcing silica filler. This allows an improvement in the wear performance by increasing the filler content of the rubber composition without any negative impact on the rolling resistance and wet performance.

In one aspect, the invention provides a rubber composition comprising:
(a) a first elastomer comprising one or more styrene butadiene copolymers having a Tg ranging from -40 to -15°C;
(b) a second elastomer comprising natural rubber; and
(c) a hydrocarbon polymer additive component comprising:
   (i) a first hydrocarbon polymer additive which is a partially hydrogenated C₅ resin; and
   (ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

In another aspect, the invention provides a process for producing a rubber composition, said process comprising the step of compounding components (a), (b) and (c) as defined herein.

In another aspect, the invention provides a vulcanizable rubber composition comprising:
(a) a first elastomer comprising one or more styrene butadiene copolymers having a Tg ranging from -40 to -15°C;
(b) a second elastomer comprising natural rubber; and
(c) a hydrocarbon polymer additive component comprising:
   (i) a first hydrocarbon polymer additive which is a partially hydrogenated C₅ resin; and
   (ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

In another aspect, the invention provides a vulcanized rubber composition obtained by, directly obtained by, or obtainable by cross-linking a vulcanizable rubber composition as herein described.

In another aspect, the invention provides a process for producing a vulcanized rubber composition, said process comprising the steps of compounding components (a), (b) and (c) as herein described whereby to produce a vulcanizable rubber composition; and subjecting said vulcanizable rubber composition to vulcanization by heating to a predetermined temperature and for a predetermined time.

In another aspect, the invention provides the use of a rubber composition as herein described as a component of a vehicle tire or in the manufacture of a component of a vehicle tire.

In another aspect, the invention provides a vehicle tire component made from a rubber composition as herein described.

In another aspect, the invention provides a vehicle tire comprising a vehicle tire component as herein described.

### Detailed Description of the invention

According to one aspect, the invention provides a rubber composition comprising:
(a) a first elastomer comprising one or more styrene butadiene copolymers having a Tg ranging from -40 to -15°C;
(b) a second elastomer comprising natural rubber; and
(c) a hydrocarbon polymer additive component comprising:
   (i) a first hydrocarbon polymer additive which is a partially hydrogenated C₅ resin; and
   (ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

As described herein, the rubber composition according to the invention may contain other components conventionally used in the compounding of rubber for use as tire treads, such as reinforcing fillers. Preferably, the rubber composition will contain at least one reinforcing filler such as silica.

Unless otherwise specified, the terms "rubber composition", "compounded rubber" and "rubber compound" are used interchangeably herein to refer to rubber which has been blended or mixed (i.e. compounded) with various components or materials and such terms are well known and understood in the art. The invention relates to rubber compositions both in the raw state (i.e. before curing or vulcanization) and in the cured or vulcanized state, i.e. after cross-linking or vulcanization.

The rubber composition according to the invention comprises a first elastomer and a second elastomer as herein defined. The degree of miscibility of the first and second elastomers may be limited. When present as a mixture in the rubber composition, these may have a tendency to generate domains in which the first or second elastomer predominates. In some embodiments, the first and second elastomers may be immiscible and will therefore be present in the rubber composition as an immiscible blend. The term "elastomer", as used herein, refers to a polymer or combination of polymers.

The first elastomer comprises at least one styrene butadiene copolymer having a high glass transition temperature, Tg. The term "styrene butadiene copolymer" refers to any synthetic rubber made by polymerisation of styrene and butadiene monomers. A styrene butadiene copolymer may also be referred to herein as a "styrene-butadiene rubber" or "SBR".

In one embodiment, the first elastomer comprises a blend of two or more styrene butadiene copolymers. For example, it may comprise two different styrene butadiene copolymers. Where more than one styrene butadiene copolymer is present in the rubber composition, it will be understood that each copolymer will have a high Tg as herein defined. The glass transition temperature, Tg, is a second order transition and is the temperature range at which an amorphous material reversibly changes from a hard or "glassy" solid state to a more pliable or "rubbery" viscous state.

Tg can be determined by differential scanning calorimetry (DSC). Tg values reported herein are determined using DSC, starting temperature: -140°C; temperature ramp: 15°C/min. Unless otherwise specified, all test methods herein described are conducted at 23°C and 50% relative humidity.

By "high Tg" it is intended that the Tg of the styrene butadiene copolymer (or copolymers) for use in the invention will be in the range from -40°C to -15°C. In some embodiments, the Tg will range from -35°C to -15°C, or from -30°C to -15°C, or from - 28°C to -18°C, or from -26°C to -21°C.

In one embodiment, the first elastomer consists essentially of one or more styrene butadiene copolymers as herein described. In another embodiment, the first elastomer consists of such copolymers.

Styrene butadiene rubber (SBR) is commonly used in the tire industry and can be made by well-known methods, such as by co-polymerisation of the corresponding monomers in emulsion, suspension or in solution. In one set of embodiments, the styrene butadiene copolymer for use in the invention may be a solution-polymerised styrene butadiene rubber (SSBR) or an emulsion-polymerised styrene butadiene rubber (ESBR). By "emulsion-polymerised styrene butadiene rubber" is meant that styrene and 1,3-butadiene are copolymerised as an aqueous emulsion. Such a method is well known and understood by those skilled in the art. Preferred for use in the invention are SBRs that are made by solution polymerisation. Styrene and butadiene monomers may be selected in a suitable ratio according to the intended use and properties of the rubber composition. For example, styrene may be present in an amount of up to about 45 wt.% (based on the total weight of the co-monomers). In some embodiments, the styrene content of the SBR may be from 10 wt.% to 40 wt.% (by weight of the SBR rubber), preferably 10 wt.% to 30 wt.% by weight, more preferably 15 wt.% to 25 wt.%, yet more preferably 21 wt.% to 24 wt.%, e.g. about 21 wt.%. Styrene content may be determined by ¹H-NMR.

The styrene butadiene copolymer (or copolymers) for use in the invention may be functionalised or non-functionalised. In one embodiment, the styrene butadiene copolymer is non-functionalised, i.e. it is unmodified. In this embodiment, the styrene butadiene copolymer does not include any functional groups. In particular, it does not have any functional groups at the ends of the main chain.

Alternatively, the styrene butadiene copolymer (or copolymers) for use in the invention may be functionalised. Reference to a "functionalised" styrene butadiene copolymer refers to modification with one or more functional groups. Where the styrene butadiene copolymer is functionalised, any of its polymer backbone, terminal groups and/or side chains may be bound to one or more functional groups. These functional groups may be incorporated into the polymer material during its production or, alternatively, they may be subsequently grafted onto the polymer. The choice of any functionalised styrene butadiene copolymer will depend on the intended use of the rubber compounds herein described. Examples of functionalised styrene butadiene copolymers include those carrying one or more reactive groups, for example groups capable of reaction with a silica coupling agent such as a sulfur-containing organosilicon compound. Representative functional groups include halogens such as Cl and Br; alkoxy groups such as methoxy; siloxy groups; and pseudohalogens such as -SCN. In one embodiment, the styrene butadiene copolymer may be a siloxy-terminated copolymer. Functional groups may also include one or more interacting groups, for example amino groups. Interacting groups such as amino groups may, for example, form hydrogen bonds within the rubber matrix of the composition.

Important contributions to energy dissipation and hence to rolling resistance in tire treads results from the presence of free ends of the polymer chains and, in embodiments comprising a filler system, such as a silica filler, from the degradation of the filler network formed by the silica filler. Advantageously, styrene butadiene copolymers having functional groups at the end and/or start of the polymer chains which enable these to physically or chemically attach to the filler surface may therefore be employed in the invention. These restrict the mobility of the polymers and hence reduce energy dissipation under dynamic stress. They also function to improve dispersion of any reinforcing filler in the rubber composition which can lead to strengthening of the filler network and hence to a lowering of the rolling resistance.

In some embodiments, the styrene butadiene copolymer for use in the invention is an end-group functionalised copolymer that may have an interactive and/or synergistic impact on the properties of the rubber compositions and give rise to advantageous properties. Specifically, when a silica filler system is present, an interaction between the end-group functionalised styrene butadiene copolymer and silica, which may be synergistic, may result in improved dispersion of the filler system in the rubber compositions and products made therefrom. An "end-group functionalised" SBR may also be referred to as a "terminal-modified" SBR. In some embodiments, the styrene butadiene copolymer may be an end-group functionalised SSBR. End-group functionalised rubbers are well known in the art and any that are known for use in the manufacture of rubber compounds for tire treads may be used in the invention.

In one set of embodiments, the first elastomer is a blend of two or more styrene butadiene copolymers each having a high Tg as herein defined. For example, it may be a blend of two such copolymers. In some embodiments, the first elastomer may comprise at least two (e.g. two) SBR components of the same type but having different (e.g. number average or weight average) molecular weights, that have been made from different polymerisation processes (e.g. solution-based polymerisation or emulsion based polymerisation), or that have different functionalities (e.g. the position of functionalisation (i.e. end-group functionalised or non-functionalised) or different functional groups).

Suitable blends of styrene butadiene copolymers may readily be selected by those skilled in the art having in mind the intended use of the rubber composition. In one embodiment, the first elastomer comprises two different SBR polymers. For example, the first elastomer may comprise a SSBR and an ESBR. In one set of embodiments, the first elastomer may comprise an end-group functionalised SBR and a non-functionalised SBR. In some embodiments, the first elastomer comprises two SSBR polymers with different molecular weights. In some embodiments, the first elastomer comprises two SSBR polymers with different percentage styrene contents.

The second elastomer comprises a natural rubber. In one embodiment, the second elastomer consists essentially of natural rubber, for example it may consist of natural rubber.

Natural rubber is well known for use in the manufacture of tires. The natural rubber for use in the invention is not particularly limited and may be any natural rubber or combination of natural rubbers commonly used in the tire industry. Particular examples include Standard Malaysian Rubber (SMR), Standard Indonesian Rubber (SIR), Specified Singapore Rubber (SSR), Standard Lanka Rubber (SLR), Thai Tested Rubber (TTR), and Nigerian Standard Rubber (NSR).

In some embodiments, the first elastomer is present in an amount from about 40 to about 90 phr with respect to 100 phr of the rubber composition, preferably from about 70 to about 90 phr, e.g. from about 80 to about 90 phr.

In some embodiments, the second elastomer is present in an amount from about 10 to about 60 phr with respect to 100 phr of the rubber composition, preferably from about 10 to about 30 phr, more preferably from about 15 to about 25 phr, e.g. from about 20 to about 25 phr.

As used herein, the term "phr" means parts per hundred parts of rubber (by weight). It is a term commonly used in the art in which the components of a composition are measured relative to the total of all rubber (i.e. elastomer) components. The total parts of the rubber components are defined as 100 phr and all other components are defined as a ratio against the 100 parts of rubber and expressed in "phr".

In some embodiments, the rubber compositions herein described may comprise other elastomer components in addition to the first and second elastomers described herein.

Other rubber components that may be present include butadiene rubber (BR), ethylene propylene diene monomer rubber (EPDM), butyl rubber (IIR), polyisobutylene rubber, epoxidized natural rubber (ENR), neoprene, synthetic polyisoprene (IR), and polyurethane.

The compositions herein described include a hydrocarbon polymer additive component. As used herein, the term "hydrocarbon polymer additive" refers to a hydrocarbon resin and is used interchangeably herein with the term "hydrocarbon resin".

The hydrocarbon polymer additive component comprises a first hydrocarbon polymer additive which is a partially hydrogenated C₅ resin; and a second hydrocarbon polymer additive which is a fully hydrogenated resin selected from a hydrogenated C₅ resin, a hydrogenated C₅/C₉ copolymer resin, a hydrogenated C₉ resin, and combinations thereof.

Additional resins may be present in the rubber composition, but in one embodiment the only resins present are the first and second hydrocarbon resins as herein described.

Exemplary combinations of the first and second hydrocarbon polymer additives include a partially hydrogenated C₅ resin and a fully hydrogenated C₅ resin; a partially hydrogenated C₅ resin and a fully hydrogenated C₅/C₉ copolymer resin; a partially hydrogenated C₅ resin and a fully hydrogenated C₉ resin. A preferred combination of hydrocarbon polymer additives for use in the invention is a partially hydrogenated C₅ resin and a fully hydrogenated C₉ resin.

As used herein, the term "hydrogenated resin" refers to a resin obtained by subjecting a resin to reductive hydrogenation. Hydrogenation may be partial, thus giving rise to a "partially hydrogenated resin" or it may be substantially complete thereby producing a "fully hydrogenated" resin.

As used herein, the term "partially hydrogenated" means that the resin component contains less than 100% olefinic protons. Partially hydrogenated resins are well known in the art and may have different degrees of hydrogenation. In some embodiments, the partially hydrogenated resin may contain less than 95% olefinic protons, more preferably less than 90% olefinic protons. In some embodiments, it may contain less than 75% olefinic protons, for example less than 50% olefinic protons. In some embodiments, the partially hydrogenated resin may contain less than 40% olefinic protons, less than 25% olefinic protons, less than 15% olefinic protons, or less than 10% olefinic protons. For example, it may contain less than 9%, less than 8%, less than 7%, or less than 6% olefinic protons. In one embodiment, the partially hydrogenated resin may contain about 5% or more olefinic protons. For example, it may contain from 5% to 90% olefinic protons. In one embodiment, the partially hydrogenated resin may contain about 5% olefinic protons, i.e. it will be about 95% hydrogenated.

As used herein, the term "fully hydrogenated" means that the resin component contains less than 5% olefinic protons. In some embodiments, the fully hydrogenated resin may contain less than 4% olefinic protons, preferably less than 3%, more preferably less than 2%, e.g. less than 1%, less than 0.5%, or less than 0.1%, e.g. less than 0.05%. In one embodiment, the fully hydrogenated resin may contain from 0 to about 3% olefinic protons, i.e. it will be about 97 to 100% hydrogenated. In one embodiment, the fully hydrogenated resin may contain from 0 to about 2% olefinic protons, i.e. it will be about 98 to 100% hydrogenated. In one embodiment, the fully hydrogenated resin may contain from 0 to about 1% olefinic protons, i.e. it will be about 99 to 100% hydrogenated. In one embodiment, it may contain about 0% olefinic protons.

Hydrogenated resins include resins produced by reductive hydrogenation of resins that include aromatic components. As will be understood, any reference herein to olefinic protons is intended to include any protons that may be present as part of an aromatic ring system. The percentages listed herein in respect of the content of olefinic protons and degree of hydrogenation refer to mol.%.

For any selected combination of hydrocarbon resins for use in the invention, the extent of hydrogenation of the "fully hydrogenated" resin will be greater than that of the "partially hydrogenated" resin, i.e. the "fully hydrogenated" resin will have a lower content of olefinic protons than the "partially hydrogenated" resin. Advantageously, the difference in degree of hydrogenation of the different hydrocarbon resins for use in the invention may be small. For example, the mol.% olefinic proton content of the different resins may differ by less than 10 mol.%, for example less than 8 mol.%, less than 7 mol.%, less than 6 mol.%, less than 5 mol.%, less than 4 mol.% or less than 3 mol.%. In one embodiment, it may differ by 1 mol.% to 10 mol.%, e.g. by 1 mol.% to 5 mol.%.

The first hydrocarbon resin is a partially hydrogenated C₅ resin. As used herein, the term "Cs resin" refers to a resin obtained by polymerisation of a cracked naphtha feed that contains C₅ monomers. C₅ monomers include olefins, linear conjugated diolefins and cyclic conjugated diolefins. Other monomers may additionally be present in the feed and these include, but are not limited to, dicyclopentadiene (DCPD).

In one embodiment, the C₅ resin for use in the invention may be obtained by co-polymerisation of C₅ monomers and DCPD monomers. Where any DCPD monomers are present, these will generally be provided in low amounts. For example, the content of DCPD in the feed used to produce the resin may be less than about 5 wt.%, e.g. less than about 2 wt.%. In one embodiment, the C₅ resin may comprise monomer units derived from C₅ monomers and from DCPD.

In another embodiment, the feed used to provide the C₅ resin may exclude any DCPD monomer. This monomer can be removed from the feed stream by methods generally known in the art. In one embodiment, the C₅ resin may therefore consist essentially of monomer units derived from C₅ monomers.

In order to improve wet performance, the hydrogenated C₅ resin for use in the invention will have a high softening point, for example a softening point higher than 110°C. As used herein, the term "softening point" refers to the temperature at which a resin flows. The softening point of a resin can be measured by the ring and ball method. Unless otherwise specified, any softening point listed herein is the "ring and ball softening point", i.e. it is the temperature at which a balls falls in the measurement of the softening point using a ring and ball softening point measuring apparatus in accordance with ASTM D 3461-76.

In certain embodiments, the softening point of the hydrogenated C₅ resin is 115°C or higher, preferably 118°C or higher, more preferably 121°C or higher, e.g. 123°C or higher. For example, it may be 125°C or higher, 127°C or higher, 128°C or higher, or 129°C or higher. From the perspective of supressing an increase in tanδ at 0°C, a softening point of the hydrogenated C₅ resin is preferably 145°C or lower. For example, the softening point may be 143°C or lower, 140°C or lower, 136°C or lower, 135°C or lower, or 133°C or lower.

From the perspective of miscibility of the resin with the rubber component, the weight average molecular weight of the partially hydrogenated C₅ resin will generally be in the range from 200 to 1200 g/mol. Unless otherwise specified, any reference herein to molecular weight refers to the weight average molecular weight, Mw. The weight average molecular weight is determined by gel permeation chromatography (GPC) relative to polystyrene standards.

In some embodiments, the weight average molecular weight of the partially hydrogenated C₅ resin may be 300 g/mol or higher, preferably 500 g/mol or higher, more preferably 700 g/mol or higher, yet more preferably 750 g/mol or higher. In other embodiments, the weight average molecular weight of the partially hydrogenated C₅ resin may be 1150 g/mol or lower, preferably 1100 g/mol or lower, more preferably 950 mol/g or lower, yet more preferably 930 g/mol or lower, e.g. 900 g/mol or lower.

In one embodiment, the partially hydrogenated C₅ resin will have a softening point higher than 110°C and a weight average molecular weight of 200-1200 g/mol.

In one embodiment, the partially hydrogenated C₅ resin will have a glass transition temperature (Tg) in the range of from 50°C to 100°C, preferably from 60°C to 90°C, e.g. from 70°C to 80°C.

The partially hydrogenated C₅ resin for use in the invention is a resin produced by subjecting a C₅ resin as herein described to partial reductive hydrogenation. Examples of the C₅ resin include aliphatic petroleum resins obtained by (co)-polymerizing a C₅ fraction obtained by pyrolysis of naphtha in the petrochemical industry. The C₅ fraction normally contains olefin-based hydrocarbons, such as 1-pentene, 2-pentene, 2-methyl-1-butene, 2-methyl-2-butene, and 3-methyl-1-butene; di-olefin-based hydrocarbons, such as 2-methyl-1,3-butadiene, 1,2-pentadiene, 1,3-pentadiene, and 3-methyl-1,2-butadiene. As herein described, the C₅ fraction may additionally contain other monomers such as dicyclopentadiene (DCPD). Where DCPD is present, it will generally be present in low amounts, for example in an amount of less than 5 wt.%, e.g. less than 2 wt.% of the Cs-containing fraction. Any of these resins may be subjected to partial reductive hydrogenation to produce a partially hydrogenated C₅ resin, for example one that contains from 3 to 9% olefinic protons, preferably from 4 to 8% olefinic protons, more preferably from 4 to 6% olefinic protons. In one embodiment, the partially hydrogenated C₅ resin contains about 5% olefinic protons.

Any commercially available product may be employed as the partially hydrogenated C₅ resin. Examples include resins having a softening point of about 130°C, a weight average molecular weight (Mw) of about 840 g/mol, and a glass transition temperature (Tg) of about 75°C.

The second hydrocarbon resin is selected from a fully hydrogenated C₅ resin, a fully hydrogenated C₅/C₉ copolymer resin, a fully hydrogenated C₉ resin, and combinations thereof.

In order to improve wet performance, the second hydrocarbon resin for use in the invention will have a high softening point, for example a softening point higher than 100°C.

In certain embodiments, the softening point of the second hydrocarbon resin is 110°C or higher, preferably 115°C or higher, preferably 118°C or higher. From the perspective of supressing an increase in tanδ at 0°C, the softening point of the second hydrocarbon resin is preferably 145°C or lower. For example, the softening point may be 143°C or lower, 140°C or lower, 136°C or lower, 135°C or lower, 133°C or lower, or 130°C or lower.

From the perspective of miscibility of the resin with the rubber component, the weight average molecular weight of the second hydrocarbon resin will generally be in the range from 700 to 1500 g/mol. In some embodiments, the weight average molecular weight of the second resin may be 800 g/mol or higher, preferably 900 g/mol or higher, more preferably 1000 g/mol or higher. In other embodiments, the weight average molecular weight of the second hydrocarbon resin may be 1400 g/mol or lower, preferably 1300 g/mol or lower, more preferably 1200 mol/g or lower.

In one embodiment, the second hydrocarbon resin will have a softening point higher than 100°C and a weight average molecular weight of 700 to 1500 g/mol. More preferably, the second hydrocarbon resin will be a fully hydrogenated C₉ resin having a softening point higher than 100°C and a weight average molecular weight of 700 to 1500 g/mol.

The second hydrocarbon resin is one produced by subjecting a resin to substantially complete (e.g. complete) reductive hydrogenation. The resin used as the starting material is selected from C₅ resins, C₅/C₉ resins, C₉ resins and combinations thereof.

Examples of the C₅ resin which may be used to produce a fully hydrogenated C₅ resin include aliphatic petroleum resins obtained by (co)-polymerizing a C₅ fraction obtained by pyrolysis of naphtha in the petrochemical industry. The C₅ fraction normally contains olefin-based hydrocarbons, such as 1-pentene, 2-pentene, 2-methyl-1-butene, 2-methyl-2-butene, and 3-methyl-1-butene; di-olefin-based hydrocarbons, such as 2-methyl-1,3-butadiene, 1,2-pentadiene, 1,3-pentadiene, and 3-methyl-1,2-butadiene. It may also contain other monomers, for example DCPD. Any commercially available product may be employed as the C₅ resin.

The term "C₅/C₉ resin" refers to a C₅-C₉ synthetic petroleum resin, and examples include a petroleum derived C₅-C₁₁ fraction including AlCl₃; solid polymers obtained by polymerization using a Friedel-Crafts catalyst such as BF₃, and more specific examples thereof include copolymers containing styrene, vinyl toluene, α-methyl styrene, indene, or the like as main components. From the perspective of compatibility with the rubber component, a resin having a small amount of C₉ or greater components is preferable as the C₅/C₉ resin. For example, the amount of C₉ or greater components may be less than 50 wt.%, and preferably less than 40 wt.%, based on the total amount of the resin. Any commercially available product can be used as the C₅/C₉ resin.

The term "C₉ resin" refers to a C₉ synthetic petroleum resin and examples include a polymer obtained by polymerization using a Friedel-Crafts catalyst such as AlCl₃ or BF₃. Examples of the C₉ resin include a copolymer containing indene, styrene, α-methyl styrene, vinyl toluene, or the like as main components. Any commercially available product may be employed as the C₉ resin. Examples include resins having a softening point of about 118-128°C, a weight average molecular weight (Mw) of about 1100 g/mol, and a glass transition temperature (Tg) of about 65-75°C.

The amount of the hydrocarbon polymer additive component present in the rubber composition will vary depending on the elastomer content. An appropriate amount may readily be selected by those skilled in the art. Generally, the total amount of the hydrocarbon polymer additive component may be in the range from about 5 to about 25 phr (with respect to 100 phr of the rubber composition), preferably from about 10 to about 20 phr, more preferably from about 12 to about 18 phr, e.g. from about 14 to about 16 phr.

The amount of each of the first and second hydrocarbon resins may be varied depending on the choice of first and second elastomers and their relative amounts in the rubber composition. Appropriate amounts may readily be selected by those skilled in art.

In one embodiment, the amount of the first hydrocarbon resin may be in the range from about 2 to about 15 phr (with respect to 100 phr of the rubber composition), preferably from about 3 to about 11 phr. In some embodiments, the amount of the first hydrocarbon resin may be in the range from about 5 to about 10 phr, preferably from about 6 to about 9 phr, e.g. from about 7 to about 8 phr.

In one embodiment, the amount of the second hydrocarbon resin may be in the range from about 2 to about 15 phr (with respect to 100 phr of the rubber composition), preferably from about 3 to about 11 phr. In some embodiments, the amount of the second hydrocarbon resin may be in the range from about 5 to about 10 phr, preferably from about 6 to about 9 phr, e.g. from about 7 to about 8 phr.

Advantageously, the weight ratio of the first hydrocarbon polymer additive to the second hydrocarbon polymer additive is in the range from 20:80 to 80:20, preferably from 25:75 to 75:25, more preferably from 30:70 to 70:30, e.g. from 40:60 to 60:40. In a preferred embodiment, the weight ratio of the first and second hydrocarbon polymer additives may be about 50:50.

In some embodiments, the ratio of the first hydrocarbon polymer additive to the second hydrocarbon polymer additive is in the range from 20:80 to 60:40, preferably from 25:75 to 50:50. In some embodiments, a ratio of about 50:50 or about 25:75 may be preferred.

The rubber compositions herein described will typically include other additives known for use in the production of rubber compositions. For example, they may include reinforcing fillers, other processing aids such as processing oils, cross-linking and curing systems, accelerators, etc.

In one embodiment, the rubber compositions further a reinforcing filler component. Filler components may, for example, be selected from silica, carbon black, carbon nanotubes, short carbon, polyamide, polyester, natural fibres, calcium carbonate, clay, alumina, aluminosilicates, and any mixtures thereof. The use of silica, carbon black and blends of silica and carbon black are generally preferred.

The term "silica filler" as used herein refers to particulate silica. Any known type of particulate silica capable of reinforcing a styrene butadiene rubber-based composition may be used. As will be understood, known silica materials typically contain a proportion of other components (e.g. as impurities), but the main component will be silicon dioxide, i.e. SiO₂. The content of silicon dioxide will generally be at least 90 wt.%, preferably at least 95 wt.%, e.g. at least 97 wt.%.

Silica materials for use in the invention are well known in the art and include, in particular, precipitated amorphous silica, wet silica (hydrated silicic acid), dry silica (anhydrous silicic acid), fumed silica, calcium silicate, aluminium silicate, magnesium silicate (e.g. Mg₂SiO₄, MgSiO₃), magnesium calcium silicate (CaMgSiO₄), and aluminium calcium silicate (e.g. Al₂O₃.CaO₂SiO₂). A single silica or combination of two or more types of silica may be used. The silica is used in the form of discrete particles, i.e. as a granulate which is highly dispersible. It may be monodisperse in size and uniform in shape. Alternatively, it may be provided in the form of branched or linear clusters. Precipitated silica material is preferred in view of its ability to impart to tread components excellent rolling resistance and wet traction.

Any known silica filler or combination of different types of silica can be used in the rubber compositions herein described. The silica may be selected according to its specific surface area. The average specific surface area of the silica may be determined by N₂ adsorption according to the Brunauer-Emmett-Teller (BET) method and by cetyltrimethylammonium bromide (CTAB) adsorption. The CTAB specific surface area is the external surface. The Brunauer-Emmet-Teller (BET) method is described in the Journal of the American Chemical Society, Vol. 60, page 309, February 1938, and corresponding to standard NF ISO 5794-1, Appendix D (June 2010). The cetyltrimethylammonium bromide (CTAB) adsorption method corresponds to ASTM D6845. Silica for use in the invention may have a BET specific surface area in the range of from 50 to 350 cm²/g, preferably from 60 to 320 cm²/g, for example from 60 to 310 cm²/g. The silica may have a CTAB specific surface area of from 55 to 285 cm²/g, preferably from 60 to 275 cm²/g, for example from 65 to 270 cm²/g.

Silica for use in the invention may be functionalised or non-functionalised. The term "functionalised silica" refers to particulate silica having a surface modified by at least one functional group. The term "non-functionalised silica" should be construed accordingly. Any reference herein to surface functionalisation of silica, or to the absence of surface functionalisation of silica, refers to the nature of the particulate silica added to the elastomer components in the production of the rubber composition according to the invention. Thus, a "surface-functionalised" silica refers to a "pre-functionalised" silica. Similarly, any "non-functionalised" silica refers to particulate silica that has not been "pre-functionalised". Any silica for use in the invention may be employed together with one or more silane coupling agents as herein described. These help to bind the silica to the elastomer component or components of the rubber composition.

In some embodiments, the silica for use in the invention may be non-functionalised. Commercial grades of such types of silica are widely available from suppliers such as Solvay. These include the silica materials supplied by Solvay under the trade names Zeosil^{®} 1085 GR and Zeosil^{®} Premium SW MP. Zeosil^{®} 1085 GR has a BET specific surface area of 90 m²/g ± 20 m²/g and a CTAB specific surface area of 80 m²/g ± 15 m²/g. Zeosil^{®} Premium SW MP has a BET specific surface area of 260 m²/g and a CTAB specific surface area of 250 m²/g.

In some embodiments, the silica for use in the invention may be functionalised. Functional groups may be non-polar or polar in nature and suitable groups may readily be selected by those skilled in the art. The silica may, for example, be surface-treated to decrease the filler-filler interaction during compounding and thus to improve its dispersibility in the rubber matrix. Compatibilising agents (also known as "covering agents") suitable for this purpose are well known in the art and include, but are not limited to, monofunctional silanes such as hexadecyltrimethoxysilane or propyltriethoxysilane. As described herein, such covering agents may be introduced when compounding the various components to form the rubber composition. Other non-polar species which may be attached to the surface of the silica particles include aromatic groups and saturated aliphatic hydrocarbons. In some embodiments, the silica surface may be functionalised with one or more polar functional groups such as those containing amine or carboxyl groups.

In one set of embodiments, the functionalised silica may comprise a silica functionalised at its surface with one or more carboxyl groups. The carboxyl groups may be present as carboxylic acids and/or as derivatives thereof such as salts or esters. Examples of such functionalised silica materials can be found in WO 2015/12133, the entire contents of which are incorporated herein by reference.

Other functionalised silicas are either known in the art or may be prepared using methods known in the art. The precise method will depend on the nature of the functional group but can readily be selected by those skilled in the art. Where the silica is functionalised with one or more carboxyl groups, the carboxyl groups may be derived by reacting a silica with one or more carboxylic acids to form the functionalised silica. Typically, the method will involve a precipitation reaction to produce the silica, i.e. the silica will be a precipitated silica. The synthesis of silica functionalised with one or more carboxyl groups is disclosed in WO 2015/121333, for example.

Where carbon black is present, this may be carbon black or modified carbon black. For example, it may be furnace black, channel blacks, or lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black for use in the rubber compositions of the present invention is CORAX^{®} N234 supplied by Orion Engineered Carbons.

In one embodiment, the filler for use in the invention may be a blend of silica and carbon black.

Rubber compositions in accordance with the invention may be made using methods known in the art in the manufacture of rubber compositions, such as compounding with other components. These further components can include additional polymers, additional processing aids (such as oils, waxes, and plasticisers), curing systems (such as vulcanising agents, vulcanisation accelerators, and vulcanisation accelerator auxiliaries), anti-degradants (such as antioxidants or antiozonants), pigments, fillers (such as silica and/or carbon black fillers as herein described), compatibilising agents for the fillers (such as silane coupling agents or covering agents as herein described), fibres, etc. Those skilled in the art can readily select a combination of vulcanizable rubber compounds and their respective amounts for subsequent mixing and vulcanization according to the specific rubber product which is desired.

Methods for the preparation of the rubber compositions herein described form a further aspect of the invention. In another aspect, the invention thus provides a process for producing a rubber composition, said process comprising the step of compounding the components (a), (b) and (c) as herein described.

In some embodiments, in addition to the first and second elastomers and the hydrocarbon polymer additive component as herein described, a vulcanizable composition may contain one or more of the following: processing aids (e.g. oils), vulcanisation activators (e.g. zinc oxide, stearic acid, etc.), vulcanising agents (e.g. sulfur or sulfur-donating compounds), vulcanisation accelerators, anti-degradants (e.g. anti-oxidants, anti-ozonants, etc.), pigments, reinforcing fillers, compatibilising agents, and silane coupling agents. Zinc oxide and stearic acid function as activators in the vulcanisation process by shortening the vulcanisation time and impact the length and number of cross-links in the rubber matrix that forms during curing or vulcanisation. Depending on the intended use of the sulfur-vulcanized material, these additives can be selected and used in the conventional amounts.

Processing aids improve the processability of the compositions and include oils, such as mineral oils, vegetable oils, synthetic oils, or any mixtures thereof. These may be used in an amount of from about 5 to 75 phr, preferably from about 10 to 50 phr. Typical processing aids include oils, such as aromatic oils. Examples of such oils include Treated Distillate Aromatic Extract (TDAE), Residual Aromatic Extract (RAE), Mild Extract Solvate (MES), and bio-based oil seed derivatives. The oil for use in the rubber compositions of the present invention is not particularly limited and may be any of those known to the person skilled in the art. For example, the oil may be one or more selected from the group consisting of processed oils such as aromatic oils, naphthenic oils and paraffin oils, vegetable oils such as coconut oil, synthetic oils such as alkylbenzene oils and castor oils. Preferably, the oil is an aromatic oil, such as a residual aromatic extract oil.

The vulcanising agent of the rubber compositions is not particularly limited and may be any of those generally known in the art. For example, the vulcanising agent may be sulfur. The amount of the vulcanising agent is not particularly limited, and an amount effective to achieve a satisfactory cure of the composition may readily be selected by those skilled in the art. The vulcanising agent (e.g. sulfur) may be used in an amount in the range from about 0.1 to about 10 phr, preferably from about 0.1 to about 5 phr, e.g. from about 0.2 to about 3 phr. For example, the rubber composition may contain from 0.3 to 2 phr, preferably from 0.5 to 1.5 phr, e.g. from 0.5 to 1 phr, of the vulcanising agent.

The vulcanisation accelerator for use in the rubber composition is not particularly limited and may be any of those generally known in the art. Accelerators include thiazoles, dithiocarbamates, thiurams, guanidines, and sulphonamides. Examples of suitable accelerators include thiazole type vulcanization accelerators such as 2-mercaptobenzothiazole (MBT), dibenzothiazyl disulphide (MBTS), N-cyclohexyl-2-benzothiazyl sulfenamide (CBS), and N-tert-butyl-2-benzothiazolyl sulfenamide (TBBS); guanidine type vulcanization accelerators such as 1,3-diphenyl guanidine (DPG); thiuram-based vulcanization accelerators such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of dibenzothiazyl disulfide (MBTS), N-cyclohexyl-2-benzothiazyl sulfenamide (CBS), and 1,3-diphenyl guanidine (DPG). The amount of vulcanisation accelerator for use in the compositions is not particularly limited and may, for example, be in the range from about 0.5 to about 10 phr, preferably from about 1 to about 8 phr, more preferably from about 2 to about 6 phr. Preferably, the vulcanisation accelerator may comprise dibenzothiazyl disulfide (MBTS) in an amount from 1 to 2 phr, N-cyclohexyl-2-benzothiazyl sulfenamide (CBS) in an amount from 0.5 to 2 phr, and 1,3-diphenyl guanidine (DPG) in an amount of 1 to 3 phr.

The vulcanisation accelerator auxiliary for use in the rubber compositions is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 phr, preferably from 1.5 to 7 phr, for example, from 2 to 5 phr. Preferably, zinc oxide may be used in an amount of from about 1 to about 10 phr, preferably from about 2 to about 5 phr, more preferably from about 2 to about 3 phr. Stearic acid may be used in an amount of from about 1 to about 5 phr, preferably from about 1.5 to about 3 phr.

As described herein, additional reinforcing fillers such as silica and carbon black may also be present in the rubber compositions of the present invention. In some embodiments, the rubber composition further comprises a silica filler in the range from 50 phr to 110 phr, preferably from 55 phr to 90 phr, e.g. from 60 phr to 80 phr, or from 60 phr to 70 phr, or from 60 phr to 65 phr.

The amount of carbon black that may be present is not particularly limited, but may be in the range from 0.1 to 10 phr, for example from 0.5 to 5 phr, or from 1 to 4 phr, e.g. from 2 to 3 phr.

The rubber composition may comprise additional fillers known to those skilled in the art. For example, the rubber compositions may comprise one or more additional fillers selected from the group consisting of aluminum hydroxide, talc, alumina (Al₂O₃), aluminium hydrate (Al₂O₃.H₂O), aluminum hydroxide (Al(OH)₃), aluminum carbonate (Al₂(CO₃)₂), aluminium magnesium oxide (MgOAl₂O₃), pyrofilite (Al₂O₃.4SiO₂.H₂O), bentonite (Al₂O₃.4SiO₂.2H₂O), mica, kaolin, glass balloon, glass beads, calcium oxide (CaO), calcium hydroxide (Ca(OH)₂), calcium carbonate (CaCO₃), magnesium carbonate, magnesium hydroxide (Mg(OH)₂), magnesium oxide (MgO), magnesium carbonate (MgCO₃), potassium titanate, barium sulfate, zirconium oxide (ZrO₂), zirconium hydroxide (Zr(OH)₂.nH₂O), zirconium carbonate (Zr(CO₃)₂), crystalline aluminosilicates, reinforcing grades of zinc oxide (i.e. reinforcing zinc oxide). If present, the amount of the further fillers may be from 5 to 200 phr, for example 10 to 150 phr or 25 to 100 phr.

The antidegradant for use in the rubber compositions of the present invention is not particularly limited and may be any of those known to the person skilled in the art. The antidegradant may be an antioxidant and/or an antiozonant. For example, the antidegradant may be one or more selected from the group consisting of N-(1,3-dimethylbutyl)-N'-phenyl-p-phenylenediamine (6PPD) and 2,2,4-trimethyl-1,2-dihydroquinoline polymer (TMQ). Preferably, the antidegradant is a combination of N-(1,3-dimethylbutyl)-N'-phenyl-p-phenylenediamine (6PPD) and 2,2,4-trimethyl-1,2-dihydroquinoline polymer (TMQ). The amount of each antidegradant may be from 0.1 to 3 phr, preferably from 0.2 to 2 phr. The total amount of antidegradant may be from 0.1 to 5 phr, preferably 1 to 3 phr.

Covering agents may be used to reduce the formation of silica aggregates during compounding. If present, these may be used in an amount of up to 5 phr, preferably from about 1 to about 3 phr. In one embodiment, no additional covering agents are present. The covering agent is not particularly limited and may be any of those known in the art. Suitable silica-based covering agents include silanes such as alkylalkoxy silanes, e.g. hexadecyltrimethoxy silane, octyltriethoxy silane and hexyltrimethoxy silane. In one embodiment, the covering agent may be grafted beforehand onto the polymer. It may also be used in the free state (i.e. not grafted beforehand) or grafted to the surface of the silica.

Coupling agents which bind to the silanol groups of silica in order to inhibit the agglomeration thereof and which also function to covalently link the silica fillers to the styrene butadiene copolymer may be present. The appropriate amount of any coupling agent can be determined by those skilled in the art having in mind factors such as its molecular weight, the number of functional groups it contains and its reactivity. Most coupling agents may be used in an isomolar amount based on the amount of silica. The coupling agent for use in the rubber compositions of the present invention is not particularly limited and may be any of those known to the person skilled in the art. In one embodiment, the coupling agent may be grafted beforehand onto the polymer. It may also be used in the free state (i.e. not grafted beforehand) or grafted to the surface of the silica.

Typically, the coupling agent will be a silane coupling agent, for example a bifunctional silane. For example, the silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. Preferably, the silane coupling agent is bis(3-triethoxysilylpropyl) tetrasulfide. A specific example of the silane coupling agent for use in the invention is Si 69^{®} from Evonik Industries AG. The amount of the silane coupling agent is not particularly limited, but may be from 2 to 20 phr, preferably from 5 to 18 phr, more preferably from 7 to 16 phr, for example from 9 to 15 phr.

The rubber compositions according to the invention may be prepared by methods known in the art and will involve mixing (i.e. compounding) of the first elastomer, second elastomer, the hydrocarbon polymer additive component, and any other components herein described to produce a rubber composition for subsequent vulcanization.

According to a further aspect, the present invention provides a method of producing a rubber product comprising the steps of: compounding the rubber composition as herein described to form a rubber compound; forming (e.g. moulding) the rubber compound into a desired shape; and vulcanising the rubber compound.

In preparing the rubber composition of the invention, the method for combining each of the components is not limited and any of the methods known in the art may be used. For moulding the rubber composition into any desired shape, any known moulding machine such as an extrusion moulding machine or press moulding machine may be used.

Mixing of the components will usually be carried out in stages in which the components may be added. Multi-step mixing processes are generally preferred to optimise dispersion of the silica filler system and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the first and second elastomers, the hydrocarbon polymer additive component, fillers (where present), additional processing aids (where present), zinc oxide, stearic acid, anti-degradants (e.g. anti-oxidants, anti-ozonants), pigments, compatibilising agents, and coupling agents (where present) are mixed to produce the initial masterbatch. This initial masterbatch may be followed by a non-productive mixing stage in which no additional components are added. Any non-productive mixing stage may be used to further disperse the components (e.g. fillers) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage the temperature may be raised, for example up to about 150°C, e.g. about 130°C. If any additional compatibilising agents are added during mixing, it may be necessary to carry out mixing at higher temperatures to ensure that these react with the silica surface (where any silica fillers is present). Mixing times may vary but can readily be determined by those skilled in the art based on the composition of the mixture and the type of mixer used. Generally a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

The vulcanizable rubber compound may be provided as an uncured (so-called "green") tire component for final vulcanisation that cures the composition. Curing to cross-link the rubber components may be carried out by known methods. In the tire industry, for example, an uncured rubber (so-called "green body") is produced followed by curing in a press mold which concurrently cross-links the rubber components and molds the components into a final tire. Vulcanisation cures the rubber by cross-linking, principally via sulfur cross-links. Vulcanisation methods and conditions for hardening the rubber composition are well known to those skilled in the art. Appropriate vulcanisation conditions typically include heating to a temperature in the range from 120 to 200°C, e.g. from 140 to 180°C, for a duration of from 5 to 180 mins, e.g. from 5 to 120 mins.

Vulcanizable rubber compositions form a further aspect of the invention. In another aspect, the invention thus provides a vulcanizable rubber composition comprising:
(a) a first elastomer comprising one or more styrene butadiene copolymers having a Tg ranging from -40 to -15°C;
(b) a second elastomer comprising natural rubber; and
(c) a hydrocarbon polymer additive component comprising:
   (i) a first hydrocarbon polymer additive which is a partially hydrogenated C₅ resin; and
   (ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

Vulcanised rubber compounds obtained by, directly obtained by, or obtainable by cross-linking any vulcanizable rubber composition as herein described are also part of the invention.

Methods of producing a vulcanised rubber composition also form part of the invention. In another aspect, the invention thus provides a process for producing a vulcanized rubber composition, said process comprising the steps of compounding components (a), (b) and (c) as herein described whereby to produce a vulcanizable rubber composition; and subjecting said vulcanizable rubber composition to vulcanization by heating to a predetermined temperature and for a predetermined time.

The rubber compositions herein described find particular use in the manufacture of vehicle tires, in particular in the manufacture of tire components such as tire treads. Tire treads may be used for tires for any vehicle, but they find particular use in the manufacture of tire treads for motor cars. Other uses for the rubber compounds include as vibration dampers, sidewall rubbers, inner liner rubbers, bead filler rubbers, body ply rubbers, skim shock rubbers and tread rubbers.

In another aspect, the invention thus provides the use of a rubber composition as herein described as a component of a vehicle tire or in the manufacture of a component of a vehicle tire.

In another aspect, the invention provides a vehicle tire component, such as a tire tread, made from a rubber composition as herein described. A vehicle tire comprising the vehicle tire component also forms part of the invention.

The assembly of the components of a tire and production methods are well-known in the art. Assembly of the "green" tire is followed by compression molding in a suitable mold in which vulcanisation produces the final tire.

The rubber compounds according to the invention may also be used for non-tire applications, such as in the manufacture of hoses and seals.

The invention is illustrated further by way of the following non-limiting Examples and the accompanying figures, in which:
Figure 1 - Elastic modulus (E') at 30°C for rubber compositions B, C, D and F according to the invention and reference compositions A and E. All results are shown as a % increase / decrease with respect to reference composition A.
Figure 2 - Tanδ at 0°C for rubber compositions B, C, D and F according to the invention and reference compositions A and E. All results are shown as a % increase / decrease with respect to reference composition A.
Figure 3 - Tanδ at 60°C for rubber compositions B, C, D and F according to the invention and reference compositions A and E. All results are shown as a % increase / decrease with respect to reference composition A.
Figure 4 - Abrasion resistance for rubber compositions B, C, D and F according to the invention and reference compositions A and E. All results are shown as a % increase / decrease with respect to reference composition A.
Figure 5 - Graph showing WEAR resistance as a function of WET braking in tire tests performed in respect of rubber composition C according to the invention and reference compositions A and E. All results are shown as a % increase / decrease with respect to reference composition A. The results for rubber compositions A and C are based on tests carried out on real tires. Those for rubber composition E are estimated by comparing laboratory results with available tire data.

### Testing Procedures:

### 1. Elastic Modulus (E')

The Elastic Modulus (E') is used to evaluate grip performance. Dynamic physical testing to determine E' at 30°C is conducted in accordance with the ISO 4664 standard.

### 2. Loss Factor (tan δ)

The loss factor (tangent δ, or tan δ) at different temperatures is used to evaluate rolling resistance and wet traction. Tan δ at lower temperatures is an indicator of wet traction. An increase in tan δ at lower temperatures, when compared to a control compound, correlates with an improvement in wet traction of the tread compound. When developing a rubber composition for a tire tread to improve the rolling resistance of the tire, it is typical to consider the loss tangent (tanδ) near 60°C as an index. Use of a rubber composition with a low tanδ near 60°C in the tread rubber can suppress heat build-up in the tire to reduce rolling resistance and thus improve fuel efficiency of the tire. Tan δ at 60°C is thus an indicator of rolling resistance (RR). A lower result, when compared to a control compound, is indicative of decreased rolling resistance. Dynamic physical testing to determine tan δ is conducted in accordance with the ISO 4664 standard.

### 4. Abrasion Resistance

Abrasion resistance is determined according to the ISO 4649 standard.

### 5. Tire Test

Tire data are obtained from tests on cars fitted with tires having tire treads made using the rubber compositions. Three different tire specifications are produced in which each specification differs only in the rubber tread compound - i.e. all other variables are kept constant. Cars are run for at least 10,000 km on a road surface and the extent of abrasion (in mm) is then measured (groove depth reduction). The Wear Life extension is determined by comparing the resistance of the tread compound C according to the invention to abrasion vs. reference compounds A and E.

### Preparation of rubber compositions:

### Materials:

| | |
|---|---|
| Rubber: | Functionalised S-SBR¹ |
| | Non-functionalised S-SBR² |
| | Natural Rubber |

### Hydrocarbon polymer additive (resin):

| | |
|---|---|
| | Partially hydrogenated C₅ / DCPD resin³ |
| | Fully hydrogenated C₉ resin⁴ |
| Silica: | Zeosil^{®} Premium Super Wear MP⁵ (Premium SW MP) (Solvay) |
| | Zeosil^{®} 1085GR⁶ (Solvay) |

Carbon Black: Corax^{®} N234 (Orion Engineered Carbons, Luxembourg)
Silane coupling agent: Si69^{®}
Low Tg oil: octyl oleate
Sulfur
1,3-diphenyl guanidine (DPG)
Dibenzothiazyl disulfide (MBTS)
N-cyclohexyl-2-benzothiazyl sulfenamide (CBS)
Stearic Acid
Zinc oxide (ZnO)

¹ Solution-polymerised, dry styrene-butadiene random copolymer functionalised for silica.
² Solution-polymerised, oil extended styrene-butadiene random copolymer. Extended with 37.5 phr TDAE oil.
³ Partially hydrogenated C₅ / DCPD copolymer resin having a softening point of 130°C, Tg of 75°C, and Mw of 840 g/mol. About 95% hydrogenated.
⁴ Fully hydrogenated C₉ resin having a softening point of 118-128°C, Tg of 65-75°C, and Mw of 1100 g/mol. About 98-100% hydrogenated.
⁵ Zeosil^{®} Premium Super Wear MP is a non-functionalised silica having a BET surface area of 260 m²/g and a CTAB surface area of 250 m²/g.
⁶ Zeosil^{®} 1085GR is a non-functionalised silica having a BET surface area of 90 m²/g and a CTAB surface area of 80 m²/g.

Rubber compositions A to E are prepared by compounding the components listed in Table 1. The amounts in Table 1 are parts by weight based on 100 parts by weight of the rubber composition (PHR). The total amount of hydrocarbon polymer additive remains constant in all compositions, but the amount of each resin component varies. Compositions B, C, D and F are rubber compositions according to the invention that include a blend of first and second hydrocarbon polymer additives. Composition F is identical to composition C, but includes an additional 6 phr of silica filler (and an increased amount of silane coupling agent). Compositions A and E are reference compositions. Composition A includes only the first hydrocarbon polymer additive and Composition E includes only the second hydrocarbon polymer additive.

**Table 1**

| | **PHR** | | | | | |
|---|---|---|---|---|---|---|
| **Materials** | **A** | **B** | **C** | **D** | **E** | **F** |
| Functionalised S-SBR | 60.2 | 60.2 | 60.2 | 60.2 | 60.2 | 60.2 |
| Non-functionalised S-SBR | 28.1 | 28.1 | 28.1 | 28.1 | 28.1 | 28.1 |
| Natural Rubber | 20 | 20 | 20 | 20 | 20 | 20 |
| Zeosil^{®} Premium SW MP | 64 | 64 | 64 | 64 | 64 | 70 |
| Zeosil^{®} 1085GR | 16 | 16 | 16 | 16 | 16 | 16 |
| CB N234 | 2 | 2 | 2 | 2 | 2 | 2 |
| Si69^{®} | 9 | 9 | 9 | 9 | 9 | 9.8 |
| Partially hydrogenated C₅ / DCPD resin | 14.5 | 10.88 | 7.25 | 3.63 | - | 7.25 |
| Fully hydrogenated C₉ resin | - | 3.63 | 7.25 | 10.88 | 14.5 | 7.25 |
| Octyl oleate | 3.5 | 3.5 | 3.5 | 3.5 | 3.5 | 3.5 |
| Sulfur | 0.60 | 0.60 | 0.60 | 0.60 | 0.60 | 0.60 |
| DPG | 1.20 | 1.20 | 1.20 | 1.20 | 1.20 | 1.20 |
| MBTS | 1.60 | 1.60 | 1.60 | 1.60 | 1.60 | 1.60 |
| CBS | 0.70 | 0.70 | 0.70 | 0.70 | 0.70 | 0.70 |
| ZnO | 2.00 | 2.00 | 2.00 | 2.00 | 2.00 | 2.00 |
| Stearic Acid | 1.50 | 1.50 | 1.50 | 1.50 | 1.50 | 1.50 |

Compounding of the components listed in Table 1 is carried out according to the following general procedure:
*Non-productive mixing stage:* all components other than the vulcanization system are added to an Intermesh Banbury mixer and mixed with the polymer base. During mixing, the temperature is initially maintained between 110°C and 130°C, and subsequently raised to between 150°C and 160°C.
*Productive mixing stage:* The mixture produced in the non-productive mixing stage is mixed with the vulcanization system at a temperature between 90°C and 110°C to effect vulcanisation of the rubber composition.

### Testing of rubber compositions:

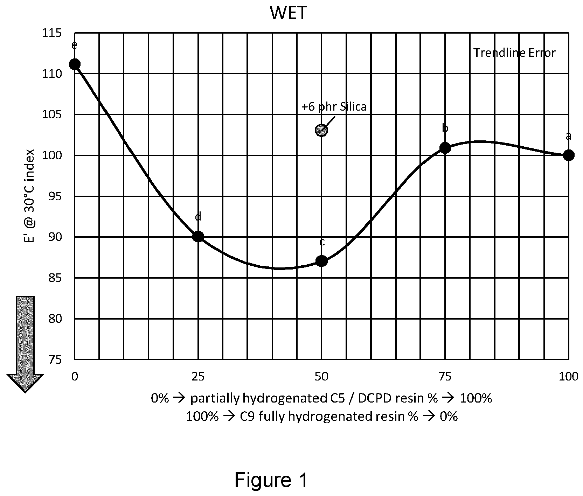

Rubber compositions A to F are subjected to the test methods described herein. The results are provided in accompanying Figures 1 to 5. These show the impact (standardised with respect to composition A) of the hydrocarbon polymer additive component on the dynamic and abrasion performance of the rubber.

Figure 1 shows the Elastic Modulus (E' at 30°C) of each rubber composition which is a measure of its stiffness. Reference compositions A and E each have a significantly higher Elastic Modulus than rubber compositions C and D according to the invention. The lower Elastic Modulus for compositions C and D is indicative of a reduction in the stiffness of the rubber which provides an improved grip and thus an improvement in WET performance. The results for compositions C and D of the invention are higher than the expected additive effect of the two resins and thus show synergy.

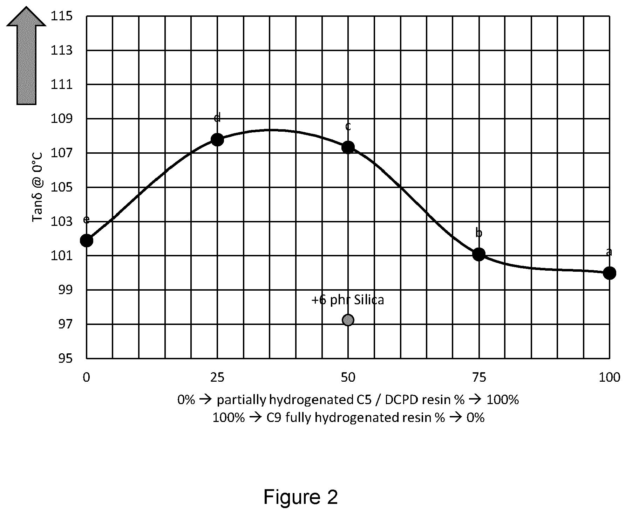

Figure 2 shows tanδ at 0°C for each rubber composition. Reference compositions A and E have a lower tanδ at 0°C than the compositions C and D according to the invention. An increase in the tanδ value at 0°C indicates that the compositions have better WET performance due to hysteresis effects. The results for the compositions C and D of the invention are higher than the expected additive effect of the two resins and thus show synergy.

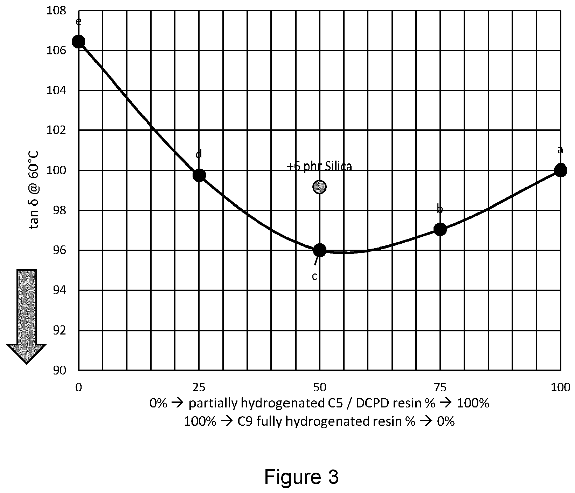

Figure 3 shows tanδ at 60°C for each rubber composition. Tanδ at 60°C is indicative of rolling resistance. Reference compositions A and E have a higher tanδ at 60°C than the compositions B, C and D according to the invention. A lower tanδ value at 60°C indicates that the compositions will have better rolling resistance performance due to hysteresis effects. The results for the compositions of the invention exceed the expected additive effect of the two resins and thus show synergy.

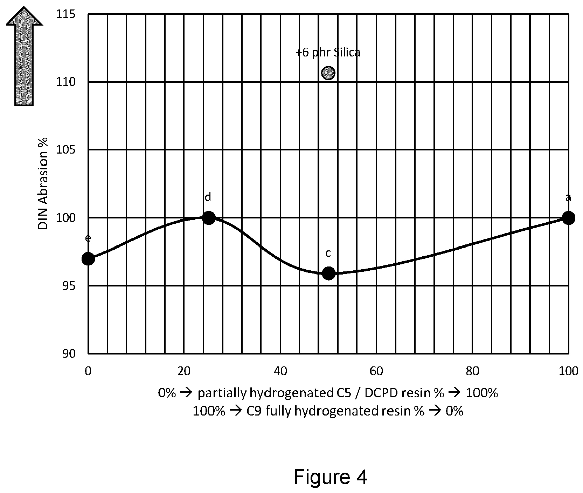

Figure 4 shows the abrasion resistance for each rubber composition. The results show that the use of the blend of resins has little or no impact on abrasion resistance compared to reference compositions A and E which contain only a single resin. As such, the blend of resins may be used to adjust other properties (such as stiffness and hysteresis) without negatively impacting the abrasion resistance.

It is also seen from Figure 4 that the addition of a further 6 phr of silica (composition F) improves abrasion resistance. Due to the significant improvement in other dynamic properties of the rubber compositions arising from the use of the blend of resins (shown in Figures 1-3), additional silica can therefore be added without negatively impacting the overall WET/WEAR/RR characteristics.

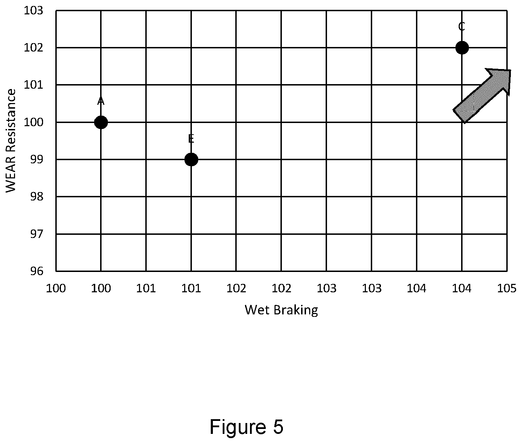

Figure 5 shows WEAR resistance as a function of WET braking in tire tests performed in respect of rubber composition C according to the invention and reference compositions A and E. This confirms the improvement in balance of WEAR and WET performance for the composition of the invention.

## Claims

1. A rubber composition comprising:
(a) a first elastomer comprising one or more styrene butadiene copolymers having a glass transition temperature, Tg, ranging from -40 to -15°C;
(b) a second elastomer comprising natural rubber; and
(c) a hydrocarbon polymer additive component comprising:
(i) a first hydrocarbon polymer additive which is a partially hydrogenated C₅ resin; and
(ii) a second hydrocarbon polymer additive which is a fully hydrogenated resin selected from the group consisting of a hydrogenated C₅ resin, a hydrogenated C₅/C₉ copolymer resin, a hydrogenated C₉ resin, and combinations thereof.

2. A rubber composition as claimed in claim 1, wherein the first elastomer is present in an amount from about 40 to about 90 phr, preferably from about 70 to about 90 phr, e.g. from about 80 to about 90 phr, with respect to 100 phr of the rubber composition.

3. A rubber composition as claimed in claim 1 or claim 2, wherein the second elastomer is present in an amount from about 10 to about 60 phr, preferably from about 10 to about 30 phr, with respect to 100 phr of the rubber composition.

4. A rubber composition as claimed in any one of claims 1 to 3, wherein the hydrocarbon polymer additive component is present in an amount from about 5 phr to about 25 phr, with respect to 100 phr of the rubber composition.

5. A rubber composition as claimed in any one of the preceding claims, wherein the weight ratio of the first hydrocarbon polymer additive to the second hydrocarbon polymer additive is in the range from 20:80 to 80:20, preferably from 25:75 to 75:25, more preferably from 40:60 to 60:40, e.g. about 50:50.

6. A rubber composition as claimed in claim 5, wherein the weight ratio of the first hydrocarbon polymer additive to the second hydrocarbon polymer additive is in the range from 20:80 to 60:40, preferably from 25:75 to 50:50.

7. A rubber composition as claimed in claim 6, wherein the weight ratio of the first hydrocarbon polymer additive to the second hydrocarbon polymer additive is about 50:50 or about 25:75.

8. A rubber composition as claimed in any one of the preceding claims, wherein the composition further comprises at least one type of reinforcing filler.

9. A rubber composition as claimed in claim 8, wherein said reinforcing filler comprises one or more silica fillers, preferably wherein said one or more silica fillers are present in an amount in the range from about 50 to about 110 phr, preferably from about 70 to about 90 phr, with respect to 100 phr of the rubber composition.

10. A rubber composition as claimed in any one of the preceding claims, wherein the olefinic proton content of the first and second hydrocarbon polymer additives differs by less than 10 mol.%.

11. A rubber composition as claimed in any one of the preceding claims, wherein the first hydrocarbon polymer additive is a partially hydrogenated C₅/ dicyclopentadiene (DCPD) copolymer.

12. A rubber composition as claimed in any one of the preceding claims, wherein the first hydrocarbon polymer additive contains about 5 mol.% olefinic protons.

13. A rubber composition as claimed in any one of the preceding claims, wherein the first hydrocarbon polymer additive has a weight average molecular weight of from about 200 g/mol to about 1200 g/mol, and/or a softening point greater than 110°C.

14. A rubber composition as claimed in any one of the preceding claims, wherein the second hydrocarbon polymer additive is a fully hydrogenated C₉ resin.

15. A rubber composition as claimed in any one of the preceding claims, wherein the second hydrocarbon polymer additive contains from 0 to about 3 mol.% olefinic protons, e.g. 0 mol.% olefinic protons.

16. A rubber composition as claimed in any one of the preceding claims, wherein the second hydrocarbon polymer additive has a weight average molecular weight of from about 700 g/mol to about 1500 g/mol, and/or a softening point greater than 100°C.

17. A rubber composition as claimed in any one of the preceding claims, wherein the first elastomer component comprises at least one solution-polymerised styrene butadiene copolymer (S-SBR).

18. A rubber composition as claimed in any one of the preceding claims, wherein the rubber composition is vulcanizable.

19. A vulcanized rubber compound obtained by, directly obtained by, or obtainable by cross-linking the rubber composition as claimed in claim 18.

20. A tire component made from a rubber composition as claimed in any one of claims 1 to 19, preferably a tire tread.

21. A vehicle tire comprising the tire component as claimed in claim 20.
